# EUROPEAN PATENT APPLICATION

(11) **EP 2 447 916 A1**
(43) Date of publication of application: **02.05.2012**
(21) Application number: 10791132.3
(22) Date of filing: 02.02.2010
(51) Int. Cl.: G06T 17/00

(54) **BLOCK MODEL CONSTRUCTING METHOD FOR COMPLEX GEOLOGICAL STRUCTURES**

(30) Priority: 24.06.2009 CN 200910059740
(71) Applicant: China National Petroleum Corporation, Dongcheng District, Beijing 100007 (CN)
(72) Inventor: TAO, Zhengxi, Sichuan 610051 (CN); LU, Cai, Sichuan 610051 (CN); LIU, Hong, Sichuan 610051 (CN); ZHU, Chen, Sichuan 610051 (CN); JING, Longjiang, Sichuan 610051 (CN); LI, Zhen, Sichuan 610051 (CN)
(74) Representative: Sonn & Partner Patentanwälte
(86) International application number: PCT/CN2010/000140
(87) International publication number: WO 2010/148625

(57) **Abstract**

A block model constructing method for complex geological structures is provided. The method comprises the following steps: a) making a triangle mesh description of a layer plane or a fault plane; b) judging whether two triangles intersect, and finding out the intersection points if they intersect; c) performing a geometric consistency and topological consistency processing within every intersectant triangle; d) extracting an enclosing block to acquire an interface constituted of peripheral edges of the enclosing block, and defining a geological attribute of the enclosing block to form a three-dimensional model block. The method needs not to solve difficult equation sets with large computation, thus simplifying the constructing method.

## Description

### Technical field

The invention relates to the technical field of geologically three-dimensional modeling method, specifically to a block model constructing method for complex geological structures.

### Background of the Invention

As objects of three-dimensional seismic exploration become increasingly complicated, and acquisition, processing and interpretation methods gradually become mature, the role of computer in the three-dimensional seismic exploration is more and more important. People urgently need a simple method to input the complex three-dimensional geological model constructed by a geologist into computer, so that the computer can recognize and identify the complex three-dimensional geological model constructed by the geologist, also can provide model input for various forward modeling methods.

Traditional layering geological model cannot accurately and vividly describe a complex three-dimensional geological model, and it is a three-dimensional cutting problem to convert a layer model into a block model, which has not been completely solved in the field of computer.

Block model constructing for complex geological structures provides new technical means for geological exploration, and it is a pioneering research subject which has long existed in petroleum geophysical exploration and presently has not been completely solved. It draws lots of attentions, and earns many theoretical and practical application results. But current research mainly focuses on the following two categories.
(1) By fitting a horizon surface or a fault surface into a high-order polynomial curved surface equation, a three-dimensional curved surface cutting problem is formed, and solving the intersection line between horizon surfaces or fault surfaces by solving the high-order equation set. Regarding the method, on one hand, it involves high-order polynomial curved surface fitting and high-order equation set solving with high difficulty and computation load; on the other hand, the accuracy of fitting hardly meets practical requirement.
(2) With triangle meshing algorithm for a horizon surface or a fault surface, the intersection line and frame line of an intersection area between the horizon surfaces or fault surfaces are solved, so as to form a space polygonal area, on which geometric consistency and topological consistency processing is carried out. The disadvantage of the method is that it has great difficulty in consistency processing for complex geological structures. Currently there is not a block model constructing method suitable for any complex geological structures.

### Summary of the Invention

To solve the above technical problems, the invention provides a block model constructing method for complex geological structures, which completely solves the problems of three-dimensional model input and blocking for complex geological area, and avoids using equation set with high solving difficulty and computation load. The method is simple and practical.

The invention is implemented by the following technical solutions.

A block model constructing method for complex geological structures, characterized in comprising the following the steps of:
a. describing triangle meshing on a horizon surface or a fault surface for data preparation;
b. converting surface intersection in the block model construction for complex geological structures into space triangle intersection after the triangle meshing is carried out on a horizon surface or a fault surface, thus determining whether two triangles are intersected, finding intersection points for the two intersected triangles, and obtaining an intersection line by connecting the intersection points for finding intersection points;
c. making geometric consistency and topological consistency processing within each intersected triangle for consistency processing; and
d. extracting an enclosing block to obtain an interface formed by range edges of the enclosing block, i.e. a triangle mesh set after the geometric consistency and topological consistency processing is made on the triangle mesh; and defining geological attributes of the enclosing block to form a three-dimensional model block for enclosing block extraction.

In the step a, describing triangle meshing on a horizon surface or a fault surface includes:
A control point P(x, y, z) of the shape of a horizon surface or a fault surface, or an intersection point P(x, y, z) between a horizon surface or a fault surface and model boundary.

A point is basic data for describing the shape of a horizon surface or a fault surface. In practice, interpolation can be performed on the basic control points as required, so as to form a new control point, which is more advantageous for describing a horizon surface or a fault surface.

Triangle T(x, y, z) formed by connecting three adjacent points on a horizon surface or a fault surface can not step across the horizon surface or fault surface.

The basic principles which should be followed by triangular description of a horizon surface or a fault surface are: firstly, the triangle should be close to equilateral triangle as much as possible and avoid long-narrow triangle, which benefits numerical processing of the model; and secondly, according to variation of horizon surfaces and fault surfaces, a new triangle mesh point is generated by interpolation of the known control points, and the triangle mesh is made denser where great variation occurs, so as to more accurately describe variation of the interface.

Surface S(x, y, z) composed of one or more connected triangles of a horizon surface or a fault surface, the minimal unit thereof is a triangle, represents local horizon surface or local fault surface.

Subarea formed by cutting horizon surface, fault surface and model boundary in three-dimensional space is subsurface s(x, y, z).

Closed three-dimensional space block composed of a plurality of subsurfaces is block B(x, y, z).

Wherein x and y are plane coordinates, and z is vertical coordinate.

In the step b, determining whether two triangles are intersected, finding intersection points for the two intersected triangles, and obtaining an intersection line by connecting the intersection points specifically include the following steps.

### (1) Performing graded regional processing on data of horizon surfaces or fault surfaces

Region segmentation on triangle set of the surface is performed, assuming the triangle set on a horizon surface or a fault surface is N, then two subareas are formed after the first grade segmentation: [0, N/2] and [N/2+1, N]; the second grade regional processing further divides each of the two subareas into two smaller areas, thus totally 4 subareas are formed on the second grade; and so on. Besides, the maximal and minimal values in x, y, z directions in each subarea are calculated.

### (2) Determining intersection of subareas

After transformation into subareas, a nested subarea queue is formed. Since the number of intersected triangles is small, there are few intersected subareas after transformation into subareas, thus it is only required to calculate intersected subareas, without further calculating non-intersected subareas. Algorithm of determining intersection of subareas is required to be very quick, but not be very accurate. Accuracy of the algorithm includes two aspects: one is two intersected subareas are determined as non-intersected, which would lead to algorithmic error, and should be avoided; the other is two non-intersected subareas are determined as intersected, which only increases calculation load without leading to algorithmic error. Therefore, the second aspect can be tolerated but the first one must be excluded by the algorithm. Assuming that the maximal and minimal values in x, y, z directions in each subarea A1, A2 are x1ₘₐₓ, x1ₘᵢₙ, y1ₘₐₓ, y1ₘᵢₙ, z1ₘₐₓ, z1ₘᵢₙ, x2ₘₐₓ, X2ₘᵢₙ, y2ₘₐₓ, y2ₘᵢₙ, z2ₘₐₓ, z2ₘᵢₙ, respectively, determining whether two space areas are overlapped, that is, if x1ₘₐₓ<x2ₘᵢₙ, or x2ₘₐₓ<x1ₘᵢₙ, or y1ₘₐₓ<y2ₘᵢₙ, or y2ₘₐₓ<y1ₘᵢₙ, or z1ₘₐₓ<z2ₘᵢₙ, or z2ₘₐₓ<z1ₘᵢₙ, the two areas are not overlapped, i.e. the two subareas cannot be intersected.

### (3) Calculating intersection of space triangles

If two subareas intersect with each other, intersection calculation is required for each triangle in the subareas. Substantially, intersection of two space triangles means intersection of two space planes, whose intersection is a space straight line. However, what is required is to calculate intersection points of the two triangles, and an intersection line is formed by connecting all intersection points. Thus calculating the intersection of two triangles means calculating intersection of three sides of one triangle with the space plane formed by the other triangle. If an intersection point lies within the triangle or lies on a side, it is a valid intersection point. In this way, the problem is concluded as calculation of intersection between a space line section and a space triangle plane.

In the step c, geometric consistency and topological consistency processing is carried out within each intersected triangle. Specifically, taking the boundary information of horizon surfaces and fault surfaces at the intersection line as limiting condition, and taking apexes of the existed triangle mesh as interpolation reference points, the interpolation is dissected again to obtain a new mesh. Through calculation of intersection points, a set of intersected triangles and a set of intersection points therewithin are obtained. Consistency processing of an intersection line can be realized by the consistency processing of each intersected triangle, thus consistency problem of surface intersection is converted into triangle meshing problem with side constraints. The constraining conditions include that:
(1) a boundary side must belong to a certain subtriangle, and other sides must belong to two different triangles;
(2) every two sides which are not connected are not intersected.

In the step d, an enclosing block is extracted to obtain an interface formed by range edges of the enclosing block, i.e. a triangle mesh set, and geological attributes of the enclosing block are defined to form a three-dimensional model block.

Specifically, using graphic-based determination method to extract triangle mesh on the boundary of the enclosing block, the detailed steps include that:
(1) the triangle meshes of the horizon surfaces and fault surfaces in the model are duplicated, so that the horizon surfaces and fault surfaces in each model have two shares of meshes; altering the direction of turning of one share of mesh; retaining only one share of triangle mesh surface for the boundary surface of the model, with its direction of turning unaltered, thus now the original neighborhood information of the sides of the triangle mesh in each surface is lost;
(2) an inner mesh unit of current geologic body is optionally selected as the current triangle, and collected into a selected triangle set; followed by searching triangles which have a common side and the same direction of turning, establishing the neighboring relationship of triangles, and performing neighborhood coreference for the common side of the current triangle and the selected triangle; if more than one triangle is found, selecting the triangle with the smallest normal included angle;
(3) the step (2) is repeated until the neighborhood information of all the sides of triangles in the triangle set is recovered, thus obtaining a boundary of the enclosing block;
(4) all enclosing blocks are iterated according to the above steps until the enclosing block is divided into a block of single nature; defining geological attributes of the enclosing block, such as velocity, density, etc, to form a three-dimensional model block.

The geometric consistency means that triangle meshes in two intersected surfaces closely connect with each other, without a gap therebetween, nor overlapping with each other.

The topological consistency means that triangle meshes in two intersected surfaces completely match with each other, and the triangle mesh on one surface can find corresponding triangle on the other surface whose two apexes are coincident.

The invention has the following advantages.

The invention makes blocking calculation with four steps a, b, c and d, with the following aspects of advantages:
1. Simple algorithm and low calculation load. Compared with the prior art described in Aspect (1) in Background of the Invention, the constructing method avoids using equation set with high solving difficulty and computation load, and it is more simple.
2. Low processing difficulty for complex geological structures. Compared with the prior art described in Aspect (2) in Background of the Invention, the present invention carries out geometric consistency and topological consistency processing within each intersected triangle, and the processing is not so difficult.
3. It solves three-dimensional cutting in geological modeling in physical exploration field regarding features of geological structure. And the solution is particularly suitable for three-dimensional model input and blocking problem for regions with complex geological structures.
4. Great theoretical significance and application value. Three-dimensional cutting problem has not been completely solved in the field of computer. The present method not only has great reference value in solving three-dimensional cutting problem theoretically, but also has great application value in the field of physical exploration.

### Brief Description of the Drawings

The detailed explanation of the invention will be made further in conjunction with appended drawings and Detailed Description of the Preferred Embodiments, wherein:
Figure 1 is a flowchart of consistency processing;
Figure 2 is a schematic diagram showing neighborhood relationship of a triangle mesh is cancelled;
Figure 3 is a schematic diagram showing neighborhood relationship is established according to direction of turning of triangle;
Figure 4 is a schematic diagram showing the relationship is determined in accordance with the smallest normal included angle of triangle.

### Detailed Description of the Preferred Embodiments

### 1. Data preparation

For data structure of a block model for complex geological structures, concepts of point, triangle, surface, subsurface and block can be cited for description, with meanings as follows.

Point P(x, y, z): refers to a control point of the shape of a horizon surface or a fault surface, or an intersection point between a horizon surface or a fault surface and model boundary, wherein x and y are plane coordinates, and z is vertical coordinate. Point is basic data for describing shapes of horizon surfaces and fault surfaces. In practice, interpolation can be performed on the basic control points as required, so as to form a new control point, which is more advantageous for describing horizon surfaces and fault surfaces.

Triangle T(x, y, z): a triangle formed by connecting three adjacent points on a horizon surface or a fault surface, it can not step across the horizon surface or fault surface. The basic principles which should be followed by triangular description of a horizon surface or a fault surface are: firstly, the triangle should be close to equilateral triangle as much as possible and avoid long-narrow triangle, which benefits numerical processing of the model; and secondly, according to variation of horizon surfaces and fault surfaces, a new triangle mesh point is generated by interpolation of the known control points, and the triangle mesh is made denser where great variation occurs, so as to more accurately describe variation of the interface.

Surface S(x, y, z): composed of one or more connected triangles of a horizon surface or a fault surface, the minimal unit thereof is triangle, and the surface represents local horizon surface or local fault surface.

Subsurface s(x, y, z): subarea formed by cutting horizon surface, fault surface and model boundary in three-dimensional space.

Block B(x, y, z): closed three-dimensional space block composed of a plurality of subsurfaces.

On the basis of the above data structure concepts, triangle meshing description is made on the horizon surfaces or fault surfaces.

### 2. Calculation of intersection point

After triangle meshing of a horizon surface or a fault surface, the surface intersection in the block model constructing for complex geological structures is converted into space triangle intersection. Generally, the number of triangle meshes in one surface is large. If the number of mesh points in a surface is 1000 × 1000, the number of triangles of the mesh is 2 million. Assuming that intersection of two surface s is to be solved, 2 million × 2 million times of intersection calculation of two triangles are needed, whose calculation load achieves 1016 times of intersection calculation of triangles, which cannot be realized. However, generally the number of intersected triangles in two surface s is small, and most triangles are not intersected. If two triangles can be quickly determined as non-intersected, the calculation times can be reduced. Thus an algorithm of "seeking intersection line of space surfaces based on binary searching" is proposed, its basic process includes the following steps.

### (1) Performing graded regional processing on horizon surfaces or fault surfaces data

The basic idea is to perform region segmentation on triangle set of surface. Assuming the triangle set on a horizon surface or a fault surface is N, then two subareas are formed after the first grade segmentation: [0, N/2] and [N/2+1, N]; the second grade regional processing further divides each of the two subareas into two smaller area, thus totally 4 subareas are formed on the second grade; and so on. Besides, the maximal and minimal values in x, y, z directions in each subarea are calculated.

### (2) Determining intersection of subareas

After transformation into subareas, a nested subarea queue is formed. Since the number of intersected triangles is small, there are few intersected subareas after transformation into subareas, thus it is only required to calculate intersected subareas, without further calculating non-intersected subarea, which could greatly decrease complexity of calculation. Therefore, algorithm of determining intersection of subareas is required to be very quick, but not be very accurate. Accuracy of the algorithm includes two aspects: one is two intersected subareas are determined as non-intersected, which would lead to algorithmic error, and should be avoided; the other is two non-intersected subareas are determined as intersected, which only increases calculation load without leading to algorithmic error. Therefore, the second aspect can be tolerated but the first must be excluded by the algorithm. Assuming the maximal and minimal values in x, y, z directions in each subarea A1, A2 are x1ₘₐₓ, x1ₘᵢₙ, y1ₘₐₓ, y1ₘᵢₙ, z1ₘₐₓ, z1ₘᵢₙ, x2ₘₐₓ, x2ₘᵢₙ, y2ₘₐₓ, y2ₘᵢₙ, z2ₘₐₓ, z2ₘᵢₙ, respectively, determining whether the two space areas are overlapped, that is, if x1ₘₐₓ<x2ₘᵢₙ, or x2ₘₐₓ<x1ₘᵢₙ, or y1ₘₐₓ<y2ₘᵢₙ, or y2ₘₐₓ<y1ₘᵢₙ, or z1ₘₐₓ<z2ₘᵢₙ, or z2ₘₐₓ<z1ₘᵢₙ, the two areas are not overlapped, i.e. the two subareas cannot be intersected.

### (3) Calculating intersection of space triangles

If two subareas intersect with each other, intersection calculation is required for each triangle in the subareas. Substantially, intersection of two space triangles means intersection of two space planes, whose intersection is a space straight line. However, what is required is to calculate intersection points of the two triangles, and an intersection line is formed by connecting all intersection points. Thus calculating the intersection of two triangles means calculating intersection of three sides of one triangle with the space plane formed by the other triangle. If the intersection point lies within the triangle or lies on a side, it is a valid intersection point. In this way, the problem is concluded as calculation of intersection between a space line section and a space triangular plane.

### 3. Consistency processing

The geometric consistency means that triangle meshes in two intersected surfaces closely connect with each other, without a gap therebetween, nor overlapping with each other. The topological consistency means that triangle meshes in two intersected surfaces completely match each other, and the triangle mesh on one surface can find corresponding triangle on the other surface whose two apexes are coincident. Thus boundary processing is required before an enclosing block is extracted. Taking the boundary information of horizon surfaces and fault surfaces at an intersection line as limiting condition, and taking the apexes of the existed triangle mesh as interpolation reference points, the interpolation is dissected again to obtain a new mesh, and the obtained triangular mesh satisfies geological consistency and topological consistency. Through calculation of intersection points, the intersected triangle set and the intersection point set therewithin are obtained. The consistency processing of an intersection line can be realized by the consistency processing of each intersected triangle, thus consistency problem of surface intersection is converted into triangle meshing problem with side constraints. The constraining conditions include the follows.

A boundary side must belong to a certain subtriangle, and other sides must belong to two different triangles.

Every two sides which are not connected are not intersected.

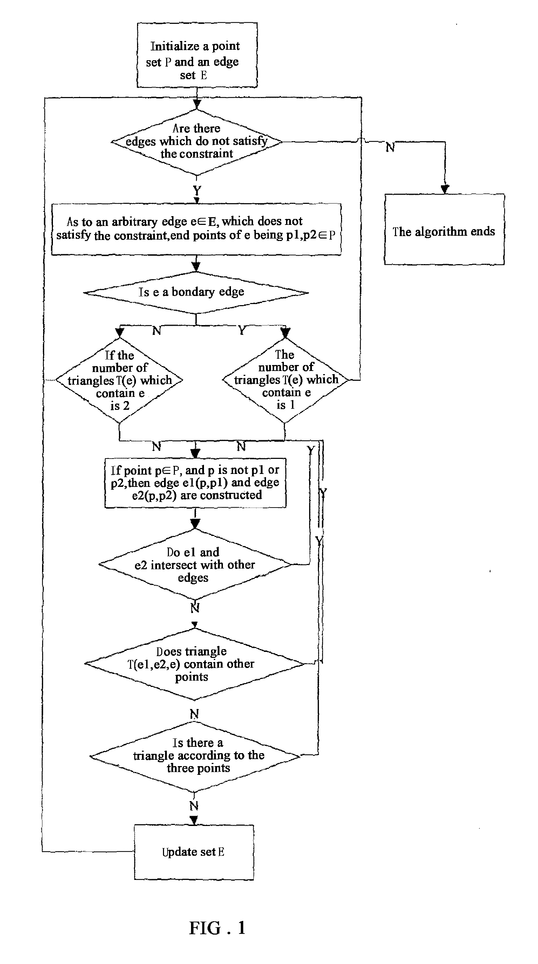

The flowchart of the algorithm is shown in Figure 1.

### 4. Enclosing block extraction

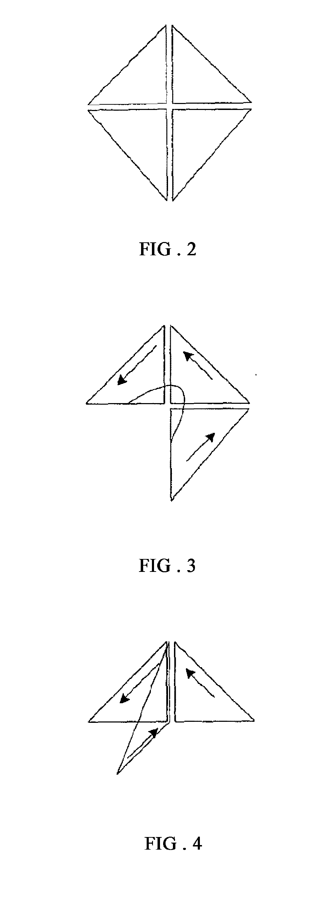

After the geometric consistency and topological consistency processing is carried out on triangle mesh on the intersected boundary, an enclosing block is extracted to obtain an interface formed by range edges of the enclosing block, i.e. a triangle mesh set. In accordance with graphics concepts, triangle mesh on the boundary of the enclosing block is extracted using graphic-based determination method, the detailed steps include that:
(1) the triangle mesh of the horizon surfaces and fault surfaces formed in the model are duplicated, so that the horizon surfaces and fault surfaces in each model have two shares of meshes; altering the direction of turning of one share of mesh; retaining only one share of triangle mesh surface for the boundary surface of the model, with its direction of turning unaltered, thus now the original neighborhood information of the sides of the triangle mesh in each surface is lost, as shown in Figure 2. a;
(2) an inner mesh unit of current geologic body is optionally selected as the current triangle, and collected into a selected triangle set; followed by searching triangles which have a common side and the same direction of turning, establishing the neighboring relationship of triangles, and performing neighborhood coreference for the common side of the current triangle and the selected triangle; if more than one triangle is found, selecting the triangle with the smallest normal included angle, as shown in Figure 2.c;
(3) the step (2) is repeated until the neighborhood information of all the sides of triangles in the triangle set is recovered, thus obtaining a boundary of an enclosing block;
(4) all enclosing blocks are iterated according to the above steps until the enclosing block is divided into a block of single nature. The geological attributes of the enclosing block (such as velocity, density, etc.) are defined to form a three-dimensional model block.

## Claims

1. A block model constructing method for complex geological structures, **characterized in** comprising the following steps of:
a. describing triangle meshing on a horizon surface or a fault surface for data preparation;
b. converting surface intersection in the block model construction for complex geological structures into space triangle intersection after the triangle meshing is carried out on a horizon surface or a fault surface, thus determining whether two triangles are intersected, finding intersection points for the two intersected triangles, and obtaining an intersection line by connecting the intersection points for finding intersection points;
c. making geometric consistency and topological consistency processing within each intersected triangle for consistency processing; and
d. extracting an enclosing block to obtain an interface formed by range edges of the enclosing block, i.e. a triangle mesh set after the geometric consistency and topological consistency processing is made on the triangle mesh; and defining geological attributes of the enclosing block to form a three-dimensional model block for enclosing block extraction.

2. The block model constructing method for complex geological structures according to Claim 1, **characterized in that** describing triangle meshing on a horizon surface or a fault surface in the step a includes:
control point P(x, y, z) of the shape of a horizon surface or a fault surface, or intersection point P(x, y, z) between a horizon surface or a fault surface and model boundary;
triangle T(x, y, z) formed by connecting three adjacent points on a horizon surface or a fault surface, which can not step across the horizon surface or a fault surface;
surface S(x, y, z) composed of one or more connected triangles of a horizon surface or a fault surface, the minimal unit thereof being a triangle, representing local horizon surface or local fault surface;
subsurface s(x, y, z), being subarea formed by cutting horizon surface, fault surface and model boundary in three-dimensional space;
block B(x, y, z), being closed three-dimensional space block composed of a plurality of subsurfaces;
wherein x and y are plane coordinates, and z is vertical coordinate.

3. The block model constructing method for complex geological structures according to Claim 2, **characterized in that**, in the step b, determining whether two triangles are intersected, finding intersection points for the two intersected triangles, and obtaining an intersection line by connecting the intersection points include that:
(1) region segmentation on triangle set of surface is performed, assuming the triangle set on the horizon surface or fault surface is N, then two subareas are formed after the first grade segmentation: [0, N/2] and [N/2+1, N]; the second grade regional processing further divides each of the two subareas into two smaller area, thus totally 4 subareas are formed on the second grade, and so on; and the maximal and minimal values in x, y, z directions in each subarea are calculated for performing graded regional processing on date of the horizon surface or fault surface;
(2) for determining intersection of subareas, after transformation into subareas, a nested subarea queue is formed; since the number of intersected triangles is small, there are few intersected subareas after transformation into subareas, thus it is only required to calculate intersected subareas, without further calculating non-intersected subareas; algorithm of determining intersection of subareas is required to be very quick, but not be very accurate; and the accuracy of calculation includes two aspects: one is two intersected subareas are determined as non-intersected, which would lead to algorithmic error, and should be avoided; the other is two non-intersected subareas are determined as intersected, which only increases calculation load without leading to algorithmic error; therefore the second aspect can be tolerated but the first one must be excluded by the algorithm; assuming that the maximal and minimal values in x, y, z directions in each subarea A1 A2 are x1ₘₐₓ, x1ₘᵢₙ, y1ₘₐₓ, y1ₘᵢₙ, z1ₘₐₓ, z1ₘᵢₙ, x2ₘₐₓ, x2ₘᵢₙ, y2ₘₐₓ, y2ₘᵢₙ, z2ₘₐₓ, z2ₘᵢₙ, respectively, determining whether two space areas are overlapped, that is, if x1ₘₐₓ<x2ₘᵢₙ, or x2ₘₐₓ<ₓ₁ₘᵢₙ, or y1ₘₐₓ<y2ₘᵢₙ, or y2ₘₐₓ<y1ₘᵢₙ, or z1ₘₐₓ<z2ₘᵢₙ, or z2ₘₐₓ<z1ₘᵢₙ, the two areas are not overlapped, i.e. the two subareas cannot be intersected;
(3) for calculating intersection of space triangles, if two subareas intersect with each other, intersection calculation is required for each triangle in the subareas; substantially, intersection of two space triangles means intersection of two space planes, whose intersection is a space straight line; however, what is required is to calculate intersection points of the two triangles, and an intersection line is formed by connecting all intersection points; thus calculating the intersection of two triangles means calculating intersection of three sides of one triangle with the space plane formed by the other triangle, if an intersection point lies within the triangle or lies on a side, then it is a valid intersection; in this way, the problem is concluded as calculation of intersection between a space line section and a space triangle plane.

4. The block model constructing method for complex geological structures according to Claim 3, **characterized in that**, in the step c, the geometric consistency and topological consistency processing is carried out within each intersected triangle refers to, taking the boundary information of horizon surfaces and fault surfaces at the intersection line as limiting condition, and taking apexes of the existed triangle mesh as interpolation reference points, dissecting the interpolation again to obtain a new mesh, and through calculation of intersection points, intersected triangle set and intersection point set therewithin are obtained, consistency processing of an intersection line can be realized by the consistency processing of each intersected triangle, thus consistency problem of surface intersection is converted into triangle meshing problem with side constraints, and the constraining conditions include that:
(1) a boundary side must belong to a certain subtriangle, and other sides must belong to two different triangles;
(2) every two sides which are not connected are not intersected.

5. The block model constructing method for complex geological structures according to Claim 4, **characterized in that**, in the step d, an enclosing block is extracted to obtain an interface formed by range edges of the enclosing block, i.e. a triangle mesh set, and geological attributes of the enclosing block are defined to form a three-dimensional model block means, using graphic-based determination method to extract triangle mesh on the boundary of the enclosing block, the detailed steps include that
(1) the triangle meshes of the horizon surfaces and fault surfaces in the model are duplicated, so that the horizon surfaces and fault surfaces in each model have two shares of meshes; altering the direction of turning of one share of mesh; retaining only one share of triangle mesh surface for the boundary surface of the model, with its direction of turning unaltered, thus now the original neighborhood information of the sides of the triangle mesh in each surface is lost;
(2) an inner mesh unit of current geologic body is optionally selected as the current triangle, and collected into a selected triangle set; followed by searching triangles which have a common side and the same direction of turning, establishing the neighboring relationship of triangles, and performing neighborhood coreference for the common side of the current triangle and the selected triangle; if more than one triangle is found, selecting the triangle with the smallest normal included angle;
(3) the step (2) is repeated until the neighborhood information of all the sides of triangles in the triangle set is recovered, thus obtaining a boundary of the enclosing block;
(4) all enclosing blocks are iterated according to the above steps until the enclosing block is divided into a block of single nature; defining geological attributes of the enclosing block, such as velocity, density, etc, to form a three-dimensional model block.

6. The block model constructing method for complex geological structures according to Claim 1 or 4, **characterized in that**, the geometric consistency means that triangle meshes in two intersected surfaces closely connect with each other, without a gap therebetween, nor overlapping with each other.

7. The block model constructing method for complex geological structures according to Claim 1 or 4, **characterized in that**, the topological consistency means that triangle meshes in two intersected surfaces completely match each other, and the triangle mesh on one surface can find corresponding triangle on the other surface whose two apexes are coincident.
